# EUROPEAN PATENT APPLICATION

(11) **EP 4 579 476 A1**
(43) Date of publication of application: **02.07.2025**
(21) Application number: 24220099.6
(22) Date of filing: 16.12.2024
(51) Int. Cl.: G06F 16/215, G06F 16/25, G06F 16/84, G06F 16/901, G06F 16/906, G06F 16/908, G06N 5/022

(54) **METHOD AND SYSTEM FOR FILE SEARCH AND METHOD AND SYSTEM FOR CREATING INDEX FILES**

(30) Priority: 27.12.2023 IT 202300028047
(71) Applicant: Digital Intelligence LAB S.r.l., 20124 Milano (MI) (IT)
(72) Inventor: MELLA, Luca, 20124 MILANO (MI) (IT)
(74) Representative: De Filippis, Sara

(57) **Abstract**

The invention pertains to a method for creating a computer-executable index file for indexing and searching non-aggregated files, wherein: during the phase of integrating and processing first contents to transform them into second contents, extractions are performed, and the extracted entities are used for at least one of the following phases:
- correlating a first extracted entity to the second contents;
- using the first extracted entity as a search key in external informational databases and, if information is found, enriching the second contents;
- correlating the second contents with the official website of the first extracted entity;
- correlating the TLD portion of an extracted domain name associated with the first extracted entity with the second contents through metadata related to the nation of the first extracted entity.

## Description

The present invention relates to a method and apparatus for searching and extracting unaggregated data, such as from online forums and chats, and organizing them to make them more easily processable.

### Field of the Invention

In particular, it concerns an advanced solution that optimizes the execution of scrapers to collect data from different sources in a coordinated manner, with accurate management of results and logs.

In recent years, the business world has been profoundly impacted by cybercrime and extortion, whose effects persist in the long term and provide a critical indicator of the actual state of corporate security management.

The growing threat of theft of valuable corporate secrets, sanctions in case of privacy violations due to data leaks, and consequences on brand reputation and customer trust have raised the need for an innovative approach to accurately assess the impact of such events on long-term corporate competitiveness.

In this context, the importance of obtaining historical data regarding corporate security emerges, so as to have them available, for example, when companies are involved in merger and acquisition processes.

Such data collection represents a crucial element for an accurate economic evaluation based on the effects that cyber events and extortion can have on the profitability and value of the companies involved.

In addition to objective evaluations, it is necessary to reveal what actually happened, beyond the subjective self-assessments that are usually provided by the companies under examination, to effectively analyze corporate risk.

An additional crucial aspect to consider is obtaining a clear view of the actual state of suppliers' information security.

In an increasingly interconnected world, companies depend more and more on the supply chain, making continuous evaluation of suppliers' information security vital to mitigate the risk of security breaches and compromises.

Such evaluation is not immediately available, as these events sometimes occur without the full awareness of the management of the company involved, and moreover, there is no organized archive related to this type of attacks.

In particular, although these actions are widely publicized in certain environments, these are not always accessible and are deliberately not aggregated among themselves, making chronological research absolutely impossible.

The present invention aims to solve the problem of understanding, with high levels of confidence and in a scalable manner on large volumes, the history of adverse cyber events that have involved organizations and companies, limiting human intervention in the verification of information and enabling scale factors capable of compensating for constant monitoring and searches across thousands of organizations.

Open-source and commercial systems are known that naively collect unverified data, often partial or pertaining to categories of events that are partial compared to what actually happens. However, such systems require data collection in manual mode, lack context, and are not immediately searchable.

For example:
- Open-source projects like https://github.com/joshhighet/ransomwatch (simple data collection without processing)
- Crowd-sourced projects like https://ransomwhe.re/ or https://gdprhub.eu/ (manual entries by the community)
- Commercial projects like https://ecrime.ch/ (simple data collection with minimal unrelated processing and partial sources)
- Commercial projects like https://darkfeed.io/ (simple data collection with minimal unrelated processing and partial sources)
- High-end commercial solutions like https://www.recordedfuture.com/ (data oriented to internal security functions and protection, with partial sources)
- High-end commercial solutions like https://securityscorecard.com/ (data oriented to third-party risk monitoring functions, but with partial sources and cyber intelligence processing with lower confidence levels)

### Object of the Invention

The invention thus pertains to a method for creating a computer-executable index file to generate an index file for searching within non-aggregated files, comprising, in sequence:
a step of collecting data from non-aggregated files in a web browser from a source of interest,
a preliminary analysis step of the said data,
a step of collecting initial content from the said data,
a step of integrating and processing the said initial content to transform it into secondary content,
a step of storing the said secondary content, and
a step of indexing the secondary content.

The method is characterized in that, during the integration and processing step of the said initial content to transform it into secondary content, informational extractions are performed on the initial content using Artificial Intelligence techniques of the NER (Named Entity Recognition) type to extract and label a plurality of entities, such as companies, organizations, references to quantities, domain names, geographical locations, personal names, or dates.

The extracted entities are used in subsequent steps to:
∘ correlate a first extracted entity with the secondary content;
∘ use the first extracted entity as a search key in external informational databases containing data on corporate structures and, where information is available, enrich the secondary content with metadata related to the correlated corporate entity, specifically legal names, aliases, associated domain names, revenue classifications, commodity categories according to international taxonomies, employee range estimates, and associated social media channels;
∘ correlate the secondary content with the official website of the first extracted entity.

Additionally, the extracted entities can be used for at least one of the following steps:
∘ perform a search with the names and aliases of the first extracted entity in external domain name resolution services to identify domain names associated with the first extracted entity that include a TLD portion;
∘ correlate the TLD portion of a domain name associated with the first extracted entity with the secondary content using metadata related to the country of the first extracted entity.

Preferably, according to the invention, during the integration and processing step of the said initial content to transform it into secondary content, at least one of the following steps occurs:
using machine learning (ML) algorithms and natural language processing (NLP) methods to extract semantic information, recognize patterns, and/or discover hidden relationships within the initial content;
extracting and analyzing initial content published by the first entities to detect financial information and/or strategic communications;
performing SERP analyses to identify ranking positions, links to institutional portals, and/or text snippets.

Furthermore, according to the invention, the data collection step from non-aggregated files in a web browser from a source of interest may include:
preparing a user profile in a lab with active sessions on sources of interest such that it has active access to the source of interest, authenticated and inclusive of cache, cookies, session storage, local storage, and permanent storage;
downloading the web browser's user profile;
configuring the user profile in the web browser so that it includes active access to the source of interest, authenticated and inclusive of cache, cookies, session storage, local storage, and permanent storage.

This advantageously avoids system maintenance efforts related to session cookie expirations and the "anti-bot" and "anti-scraping" protections that such sources often employ, including those in the deep and dark web.

Additionally, during the integration and processing step of the initial content to transform it into secondary content, the following steps may be included:
using NER-based AI techniques on certain fields of the initial content, such as "title" fields or text portions likely to mention the first entities,
identifying a string associated with the first entity and adding this string to the secondary content.

This advantageously facilitates subsequent computations. In this case, the invention may include the following steps:
inserting the string as a search key in an external informational database containing data on corporate structures to obtain a textual record and/or corporate website,
inserting the textual record into the secondary content.

Optionally, in the absence of a textual record or corporate website:
using the string as a search key in an external name/domain resolution service to obtain a textual record and/or corporate website,
inserting the textual record into the secondary content.

In this context, the following steps may also be included:
correlating the textual record with its respective corporate website,
filtering the corporate website through a blacklist system to reduce the rate of false correlations.

In particular, it is possible to:
extract domain and subdomain names to isolate the primary and secondary domain names of the first entity.

This improves the efficiency of indexing operations and enhances the accuracy of data access during access flows.

According to the invention, the following step may also be included:
processing the textual record with a GPT (Generative Pre-Trained Transformer) AI algorithm to generate a concise summary of the main information contained in the textual record.

In this case, the following steps may also be included:
identifying the presence of sensitive data types, such as "personal data," "financial data," or "customer data";
in positive cases, enriching the textual record with a label indicating the possible presence of such information types.

Preferably, before the indexing step, a phase may involve:
configuring a "schema-free" engine to customize the mapping of secondary content such that symbols like "-" and "." in textual records related to websites are interpreted as alphanumeric characters.

This significantly reduces the false match rate during access flows.

Additionally, before indexing, the following step may be included:
creating a series of descriptive texts encoded in UTF-8, of appropriate length for the Word Embedding algorithms used and/or selecting the most relevant fields of the secondary content.

This also significantly reduces the false match rate during access flows.

Specifically, the indexing step may include at least one of the following:
selecting a portion of secondary content,
extracting the selected portion of secondary content,
generating a corresponding textual representation for each selected portion of secondary content.

These steps enhance the accuracy of user search results.

The textual representation generation is performed by remapping the selected portion of secondary content through the tabulation of field selections using the following syntax:
BNF records := <record> ["\n" "\n" <record>];
Record := <field> "." [ <record> ] ;
Field := <header> ":" <record_piece> ;
Header := <:alphanum:> ;
Record_piece := <:alphanum:> [ " " <record_piece> ].

Following the generation of a textual representation, the following steps may occur:
splitting the textual representation into segments,
passing the segments through an AI vectorization algorithm to convert them into corresponding vectors,
inserting the obtained vectors into a vector database configured with cosine distance metrics.

This advantageously enhances the accuracy of responses to user searches.

### Brief Description of the Figures

The present invention will now be described, by way of example and not limitation, according to some of its preferred embodiments and with the aid of the attached figures, in which:
Figure 1 is a diagram of the composition of the system of the invention;
Figure 2 is a diagram of the operation of the data collection process that constitutes a part of the method of the invention;
Figure 3 is the diagram of a flow concerning the overall orchestration of the different scrapers used for the process of Figure 2;
Figure 4 is the diagram of a flow concerning the implementation of the orchestration of the scrapers and their controlled execution in the process of Figure 2;
Figure 5 shows a first extraction flow in the process of Figure 2;
Figure 6 is a diagram of the operation of the structured processing of data flows through the orchestration of parsers, which constitutes a part of the method of the invention;
Figure 7 is a second diagram of the operation of the orchestration of the parsers;
Figure 8 shows an analysis flow through the parsers of Figure 9;
Figure 9 shows the structure of the parsers of the system of the invention;
Figure 10 shows the structure of the enrichers of the system of the invention;
Figure 11 shows the orchestration of the entire data enrichment process through the enrichers of Figure 10;
Figure 12 shows the flow of the orchestrator of the enrichers of Figure 10;
Figure 13 shows the structure of the indexers of the system of the invention;
Figure 14 shows the flow of the orchestrator of the indexers of Figure 13;
Figure 15 shows the response structure for accessing the information of the system of the invention.

### Detailed Description

### General Structure

The system is composed of three subsystems:
An intelligent raw data collection system from multiple sources, including criminal blogs on the darknets (anonymous internet networks), blogs in the underworld of cybercrime, portals of criminal announcements and auctions (on darknet), official corporate sources, local, international, and sector-specific news outlets, and communication channels of institutional bodies such as guarantor authorities and European protection boards. This subsystem performs a preliminary analysis of the data within these types of sources and collects the raw content potentially of interest for the platform's purposes.

An integration and processing system: This system analyzes the raw data collected by the collection subsystem, recursively applies data extraction algorithms through artificial intelligence and machine learning models, identifies the companies mentioned in the raw data, correlates the companies with domain names, legal entities, industry sectors, social profiles, and context information related to the company. It analyzes and synthesizes the content of the announcements and mentions, expresses a veracity value, and archives the data in multiple formats useful for efficient indexing for user use.

An indexing and information access system: This subsystem handles the indexing of enriched and correlated data through selective export to fleets of high-performance databases configured with indexes suitable for multiple types of matching (mechanism of correspondence to obtain information relevant to the requests), such as phrases, keywords, domain names, portions of domain names, with the possibility of using massive queries. This subsystem also transforms the enriched data into embedding vectors (an innovative encoding technology in the field of Generative Artificial Intelligence), to make the enriched data understandable through artificial intelligence relatable to the user. The data, newly archived and made "reasonable by artificial intelligences," are then made available to the user through authenticated and protected REST APIs (web technology).

In the various figures, similar phases will be indicated with the same numerical references.

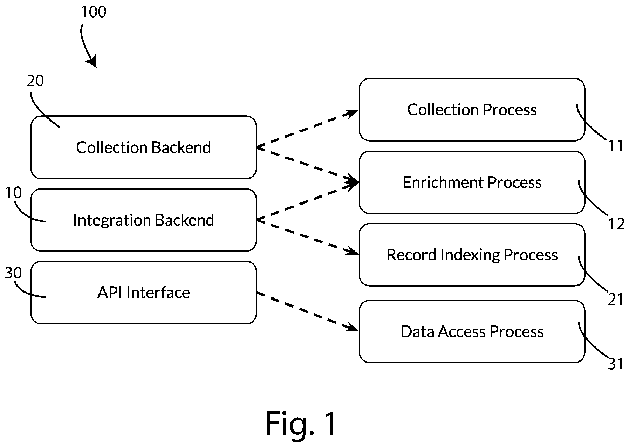

Referring to Figure 1, the system 100 of the invention is composed of three macro components: Backend Integration 10, Collection Backend 20, and API Interface 30.

The system 100 is also based on four main flows: Collection Process 11, Data Enrichment Process 12, Record Indexing Process 21, and Data Access Process 31.

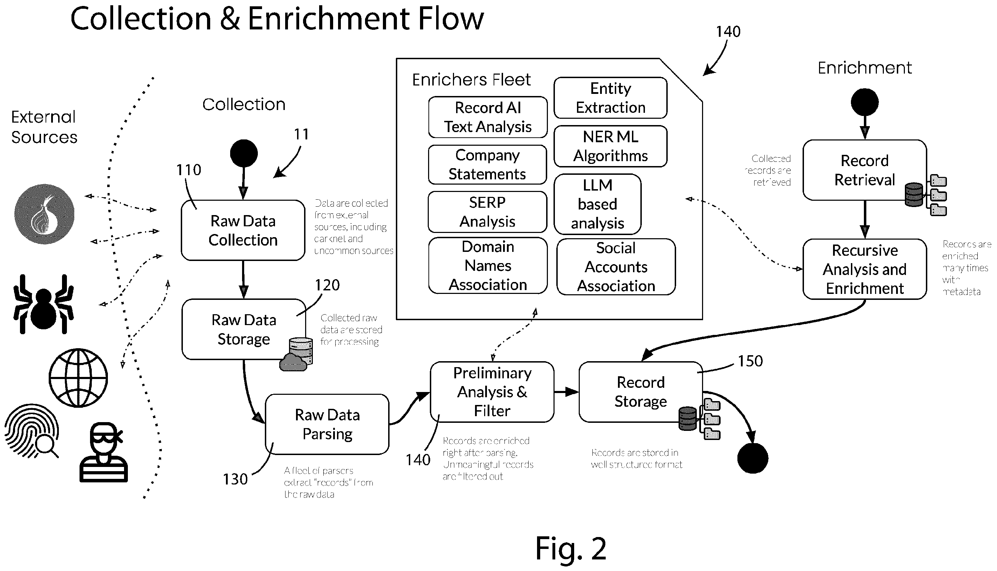

The Collection Process 11 is organized into the following four distinct phases, as shown in Figure 2.

### Phase 110 - Raw Data Collection:

In this phase, data is collected from various external sources, including the darknet and other uncommon sources. This collection process aims to gather a wide variety of data to ensure a comprehensive panorama of the available information.

### Phase 120 - Raw Data Archiving:

The collected data is archived in a dedicated repository, ready to be processed. Archiving raw data is essential to allow effective subsequent processing.

### Phase 130 - Raw Data Analysis:

During this phase, a set of parsers is used to extract significant "records" from the archived raw data. This extraction is guided by predefined rules and patterns that allow identifying relevant information within the data.

### Phase 140 - Preliminary Analysis and Filtering:

Once the "records" have been extracted, a preliminary analysis follows. During this phase, the records are enriched with additional information to improve the understanding of their content. Records devoid of meaning or relevance are filtered and removed from the dataset. This filtering process is essential to focus attention only on valuable information. Therefore, NLP Entity Extraction algorithms are used to evaluate the presence of mentions of companies and organizations; if not present, the record is discarded.

In this phase of preliminary analysis and filtering, the records undergo a first preliminary enrichment. The enrichment system includes the tools specified below:
- Record Text Analysis AI: An enricher that exploits Artificial Intelligence (AI) to perform a deep analysis of textual data. Using machine learning (ML) algorithms and natural language processing (NLP) methods, this enricher extracts semantic information, recognizes patterns, and discovers hidden relationships within texts.
- Company Declarations: Extraction and analysis of official statements released by companies. This enricher detects financial information, strategic communications, and more from public company statements.
- SERP Analysis (Search Engine Results Page): Explores the search engine results pages (SERP) to extract information related to a specific topic or company. This enricher identifies ranking positions, links to institutional portals, text snippets, and other relevant elements from search engine results.
- Domain Name Association: An enricher that links company information to its related web domains. This enricher provides an overview of the company's online presence and identifies its digital resources.
- Entity Extraction (NER): Uses natural language processing algorithms to identify and extract entities, such as names of people, places, dates, quantities of stolen data (TB/GB), and amounts of ransom demanded from unstructured data.
- Social Profile Association: Links company or individual information to their related social media profiles. This enricher creates a connection between online activities and the information collected.

### Phase 150 - Record Archiving:

At the end of the enrichment and Phase 140 of preliminary analysis and filtering, the records are archived in a well-structured format.

### Particularities in Raw Data Collection

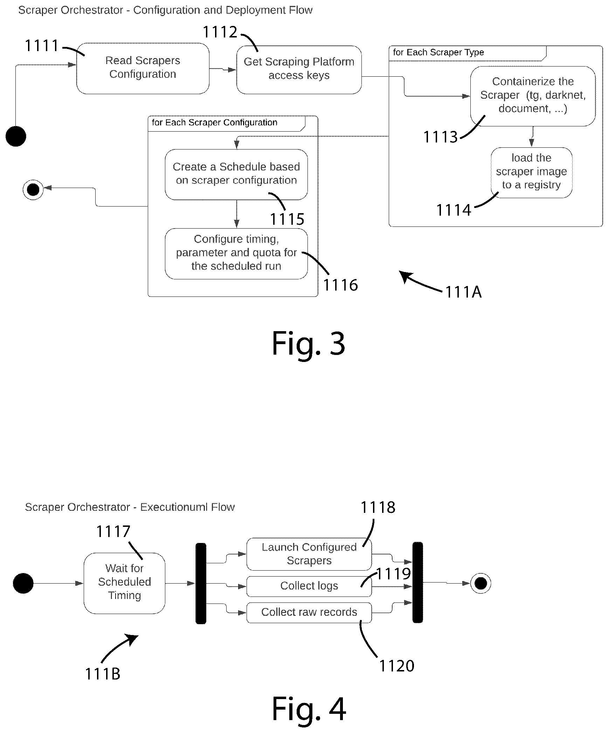

Referring now to Figure 3, a flow is shown concerning the overall orchestration of the different scrapers used for data collection. During this flow, different scrapers are configured and distributed to perform "scraping" from various sources. This orchestration ensures that the "scraping" processes are synchronized and well-managed.

The workflow is organized into a series of interconnected phases:
Flow 111A - Scraper Orchestration: Configuration and Distribution Flow (Figure 3)

### Phase 1111 - Reading the Scraper Configuration:

In this phase, the scraper configuration is read, including the specific settings for the type of data to be collected and the sources from which to collect.

### Phase 1112 - Obtaining Access Keys to the Scraping Platform:

For each type of scraper, access keys to the specific scraping platform are obtained, necessary to access the specific scraping resources.

### Phase 1113 - Cataloging the Scrapers:

The different scrapers are packaged, i.e., cataloged in isolated environments known as containers. This process ensures isolation and portability of the scrapers.

### Phase 1114 - Loading the Scraper Image into a Registry:

The images containing the cataloged scrapers are loaded into a registry, a resource where they can be stored and distributed for easy access.

### Phase 1115 - Creating a Schedule Based on the Scraper Configuration:

For each scraper configuration, a scheduled execution program is created. This program defines when and how the scrapers will be executed for data collection.

### Phase 1116 - Configuring Timing, Parameters, and Quotas for Scheduled Execution:

Within each scheduled execution program, specific timings, parameters, and quotas that regulate the execution of the scrapers are configured. This includes the time they will be executed, the parameters for collection, and the quotas to avoid excessive use of resources.

The flow shown in Figure 3 allows rigorous and detailed control of the execution of scrapers for data collection. The coordinated management of execution timings, along with the collection of logs and raw records, ensures reliable and complete data collection. This approach offers greater control and monitoring of scraping processes, allowing optimized data processing and obtaining relevant information from heterogeneous sources.

### Flow 111B - Scraper Orchestration: Execution Flow (Figure 4)

This series of phases, shown in Figure 4, represents the implementation of the orchestration of the scrapers and their controlled execution. The operational flow is divided into several phases, each playing a key role in obtaining accurate and reliable data from the identified sources.

### Phase 1117 - Waiting for the Scheduled Timing:

During this phase, the system constantly monitors the scheduled time for the execution of the scrapers. As soon as the predetermined moment arrives, the system moves to the next phase.

### Phase 1118 - Starting the Configured Scrapers:

The scrapers configured based on the timings and established settings are started. This synchronized activation allows the scrapers to start simultaneously to collect data from their respective sources.

### Phase 1119 - Collecting Logs:

While the scrapers are running, the system collects the logs of each scraper. The logs contain detailed information about the scrapers' activities during execution, including any errors or exceptions.

### Phase 1120 - Collecting Raw Records:

The raw records extracted from the sources during the scrapers' execution are collected. The raw records represent the unprocessed data from the different sources, ready for subsequent processing and analysis.

The flow of Figure 4 allows simplified and systematic management of automated data collection processes through the orchestration of different scrapers. This approach offers greater control, precision, and scalability in obtaining data from different sources. The flexible configuration and accurate scheduling of executions make the scraping process more efficient and adaptable to specific data collection needs.

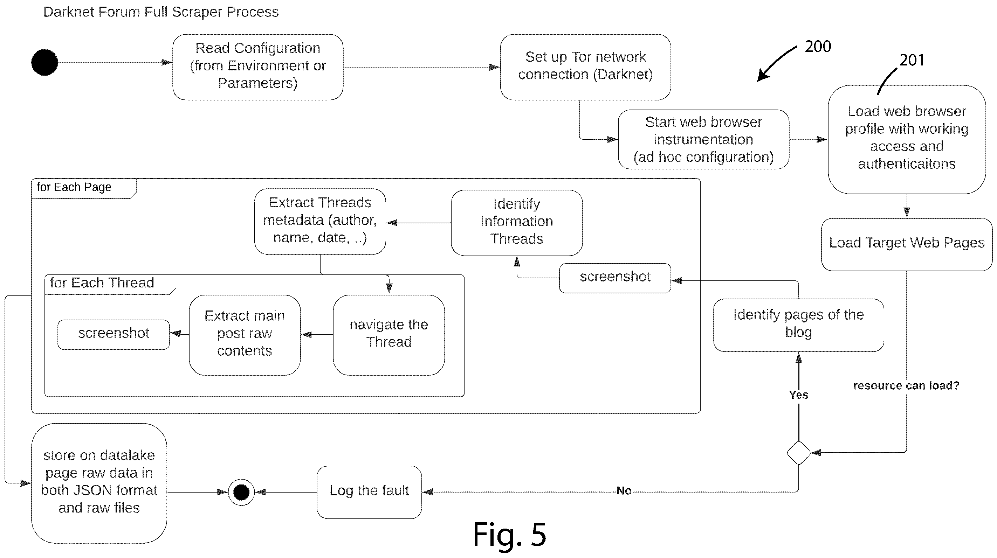

Moreover, the flow 200 of Figure 5 solves the problem of authentication to "closed" web systems (e.g., forums and markets in the deep web and dark web) through the use of web browser instrumentation techniques with "pre-authenticated profiles." Normally, the problem of the authentication process to these information sources is solved through the use of pre-authenticated session cookies or through the coding of login procedures.

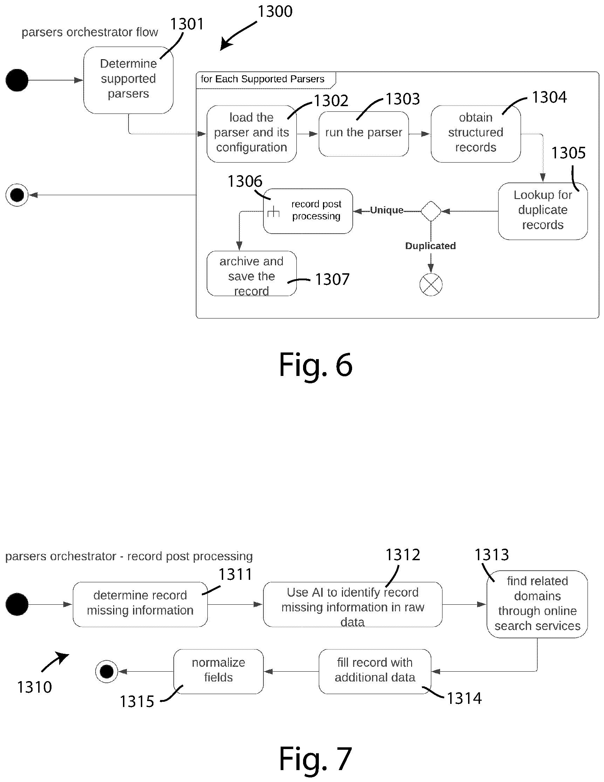

However, such approaches require significant maintenance efforts due to the expirations imposed on session cookies and the "anti-bot" and "anti-scraping" protection mechanisms that this type of sources in the deep and dark web have. The algorithmic representation in Figure 7 shows, at the top right, a particular phase called "Load web browser profile with working access and authentication," which represents a distinctive element of ingenuity in solving the problem of authentication to sources in the deep and dark web. In detail:
Prior to navigation and scraping activities, a portable user profile of the web browser is downloaded, previously prepared in the lab with active sessions at the sources of interest.

The locally downloaded profile is configured within the instrumented browser, which inherits all active accesses to the sources, previously authenticated and including cache, cookies, session storage, local storage, and permanent storage.

Subsequent navigation of the scraper agent on the resources of interest takes place in continuity with the pre-configured authenticated sessions, bypassing all controls aimed at inhibiting data collection that deep and dark web sources implement, thus limiting the maintenance interventions of access secrets for this class of sources.

### Upon successful access, the scrapers operate in two distinct modes:

Simple extraction of raw data from the page: Retrieving the raw content from the Document Object Model (DOM) of the page after full loading, but not before a waiting time configured for each source. This precaution allows expanding the information collection capacity, as many sources within the darknets use asynchronous information loading that occurs with certain delays after the initial page load completion.

Iterative navigation: The scraper, similar to the previous mode, performs the page loading with precautions and waiting times but also analyzes the DOM to identify links to detailed posts mentioned on the page. Once identified, the scraper navigates the post links by simulating a user click and forcing navigation in the same browsing tab. This approach improves the chances of maintaining the pre-configured authenticated session and allows optimal management of Single Page Application (SPA) web sources, where opening in a new tab may hinder loading desired resources. After loading the post information, the scraper collects the raw data from the page's DOM. Then, after a stochastic waiting time aimed at reducing the risk of bans or blocks by deep web sources, the scraper simulates navigating back to the previous page within the same tab, returning to the page where the list of links was identified and proceeding with the same steps for subsequent links until completion.

### Processing of Raw Data

The phases of the Collection Process 11 allow efficient management of the data retrieved from the scraping processes, making them easily accessible for further analyses and evaluations. The ability to accurately filter data allows focusing only on relevant and significant information, saving time and resources. Furthermore, the system offers a preliminary analysis that enriches the records and prepares the data for further decision-making processes.

Figures 6-8 refer to the details of Phase 130, particularly Figure 7, which illustrates a flow for the structured processing of data flows through the orchestration of parsers, allowing effective determination, loading, execution, and post-processing of specific parsers. This solution offers efficient and accurate data management, with particular attention to detecting and managing duplicate records.

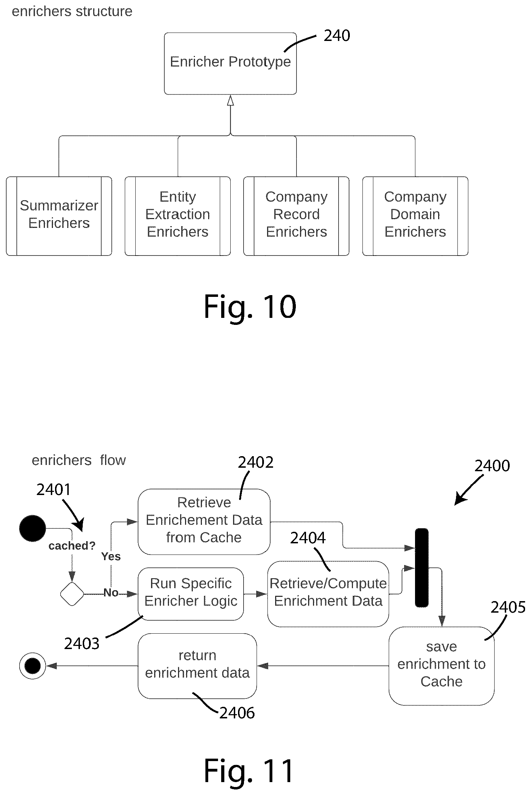

### Flow 1300 - Orchestration of Parsers (Figure 10)

Designed to address challenges related to analyzing complex and heterogeneous data flows, Flow 1300 is activated and controlled by a parsers orchestrator. This component manages the entire process and coordinates the action of the various parsers involved in the analysis according to the phases detailed below.

### 1301 - Determination of Supported Parsers:

Before starting the analysis, the system determines which parsers are supported and compatible with the incoming data. This step ensures that only relevant parsers are used for subsequent analysis.

For each supported parser, the system performs the following steps 1302-1307.

### 1302 - Loading the Parser and Its Configuration:

The appropriate parser is loaded along with its configuration, which defines how the parser should analyze and interpret the incoming data.

### 1303 - Execution of the Parser:

Once loaded and configured, the parser is executed on the incoming data, involving interpretation and extraction of relevant information from the data.

### 1304 - Obtaining Structured Records:

After executing the parser, the data is transformed into structured records, which is fundamental for accurate analysis and subsequent data manipulation.

### 1305 - Searching for Duplicate Records:

The obtained structured records are checked for duplicates, a crucial step to effectively identify and manage duplicate data present in the flow.
- If the record is unique (IF: Unique), Phase 1306 is executed, where post-processing operations are performed for further improvements or analyses. Subsequently, according to Phase 1307, the record is archived and saved.
- If the record is duplicated (IF: Duplicated), the process moves to the next record, as the record under examination has already been treated in a previous phase.

This Flow 1300 of figure 6 offers a complete and systematic approach for structured data flow analysis, ensuring efficiency, accuracy, and appropriate management of duplicate data. The well-defined sequence of steps in the orchestrated flow of parsers represents a significant advancement in data processing.

In summary, Flow 1300 provides an innovative solution for structured processing of data flows through the orchestration of parsers. Attention to determining supported parsers, precise execution, duplicate management, and post-processing ensures obtaining reliable and high-quality data for a wide range of applications.

Figure 7 presents a system (1310) for advanced record processing through the orchestration of parsers and the application of Artificial Intelligence (AI) techniques to identify and fill missing information in raw data, as well as normalize record fields to obtain complete and consistent data.

### 1310 - Parsers Orchestrator - Record Post Processing (Figure 7)

The system described incorporates a parsers orchestrator that guides the data processing flow, coordinating the action of the parsers involved in the analysis and transformation of data through the following phases:
1311 - Determination of Missing Information in Records:
   Before proceeding to processing, the system identifies records containing missing information to ensure data completeness and accuracy.
1312 - Use of AI to Identify Missing Information in Records from Raw Data:
   The key innovation lies in applying AI algorithms to detect missing information in raw data. The AI analyzes the data for clues, patterns, and contexts to determine the missing information in each record.
1313 - Searching for Related Domains through Online Search Services:
   Once missing elements are identified, the system uses online search services to find related domains and external sources that may contain the missing information, broadening the search scope.
1314 - Completing Records with Additional Data:
   Based on search results, the system collects additional data from relevant external sources, integrating them into the records to fill information gaps.
1315 - Field Normalization:
   Finally, the system normalizes the record fields, ensuring data is organized in a consistent and uniform format, improving subsequent analysis and manipulation.

This approach of fig. 7 represents a significant leap in data processing, combining the efficiency of parsers orchestration with the power of AI to obtain complete, enriched, and well-structured records. The use of AI for identifying missing information and enriching data through online searches demonstrates an integrated and advanced approach in data analysis and management.

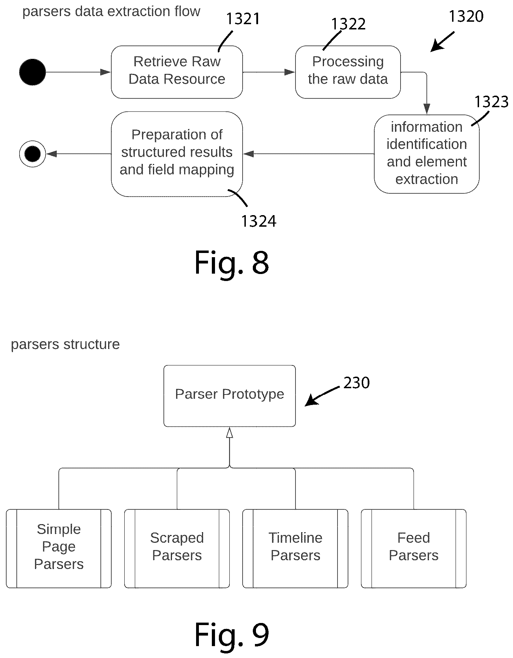

Figure 8 illustrates system (1320) for the structured extraction of data through a parsers flow, where raw data is processed, analyzed, and transformed into precise structured results.

### 1320 - Data Extraction Flow through Parsers (Figure 8)

This flow details the process through which data is extracted and transformed using a parsers flow, ensuring accurate and consistent data processing with the following phases:
1321 - Retrieval of Raw Data Resources:
   The flow begins by retrieving raw data resources, which can be in various formats like text, images, or structured files, preparing them for subsequent processing.
1322 - Processing of Raw Data:
   The system subjects the raw data to initial processing, which may involve data cleaning, normalization, and other preparatory operations to ready the data for information extraction.
1323 - Identification of Information and Extraction of Elements:
   The system identifies relevant information within the processed data, using advanced methods like pattern recognition and semantic analysis to extract specific elements leading to significant information.
1324 - Preparation of Structured Results and Field Mapping:
   Extracted information is used to create structured results, transforming it into a consistent and organized format. The system also performs field mapping, associating each extracted element with the appropriate field in the structured result.

This advanced methodology shown in figure 8 ensures raw data is transformed into meaningful structured results through an optimized parsers flow, demonstrating a complete and efficient approach for data analysis and organization.

Figure 9 shows the structure of parsers (230) used in data processing, presenting four distinct types that comprise the system. This modular organization allows flexible and targeted data processing, adapting to different sources and data types to be analysed.

As shown in the above cited images, the parsing flow occurs within multiple incarnations of the parsers due to the nature of the source types, all sharing the same behavioral dynamics. Each parser is fed by the raw data extracted by the scrapers, processed with multiple techniques: extractions through regular expressions, loading and navigation of the DOM, or interpretation of structured data. This interpretative phase is preconfigured for each parser, aiming to extract portions of raw data containing useful information for creating the information record, such as fields likely to contain company names.

The parsing flows are orchestrated as per the diagrams of Figures 6 and 7. During this orchestration, a particularity arises:
- Since the record extracted by the parsers is raw, it undergoes post-processing to perform a first refinement, facilitating the enrichment flows described later and decisions on the relevance of the records. Specifically:

- AI techniques of the NER (Named Entity Recognition) type are used on some fields of the raw record, such as the "title" or text portions likely to mention companies.
- If the NER algorithm identifies company names, they are added to the record recognizably for subsequent computations.
- Post-processing continues with normalization operations, like representing date fields according to the ISO 8601 format, replacing excessive spacing and tabulations, normalizing state and actor names, etc.

This preliminary enrichment increases the efficiency of subsequent enrichment flows, enabling faster completion due to prior analysis and leveraging additional information to extend the correlated information perimeter more quickly.

### Record Enrichment

In this context, "enrichment" refers to at least one of the following actions: recursive processing of informational records, reasoning upon them, information extraction, and correlation with complementary information.

Figure 10 introduces the structure of the enrichers 240 used to expand and enhance information, focusing on data enrichment process 12. Its modular organization, specified in the following paragraphs, allows detailed and specific management of the different types of enrichers 240 that compose the system.

The structure of the enrichers 240, as described above, demonstrates a detailed and focused approach to information enhancement. The combined use of various specialized types offers a wide range of possibilities for data enrichment, allowing detailed analysis and a deep understanding of the collected information.

Figure 10 details the flow of the enrichers, while Figure 11 shows the orchestration of the entire data enrichment process.

### 2400 Enricher Flow: Figure 11

The enricher flow 2400 represents the main pathway through which data is enriched and stored. This flow also incorporates the concept of caching to improve the efficiency of enrichment.

### 2401 Cached?

If the enrichment data is already stored in the cache, the flow proceeds to step 2402. Otherwise, it proceeds to step 2403.

### 2402 Retrieve Enrichment Data from Cache

If the enrichment data is present in the cache, it is retrieved. Subsequently, the flow proceeds to step 2405.

### 2403 Execution of Specific Enricher Logic

If the enrichment data is not present in the cache, the specific logic of the enricher is executed. This phase involves the extraction or calculation of enrichment data.

### 2404 Retrieval/Calculation of Enrichment Data, then proceed to step 2405

After executing the specific logic of the enricher, the enrichment data is retrieved or calculated. Subsequently, the flow proceeds to step 2405.

### 2405 Store Enrichment Data in Cache

The obtained enrichment data is stored in the cache for future use.

### 2406 Return Enrichment Data

Finally, the enrichment data is returned as the result of the enricher flow.

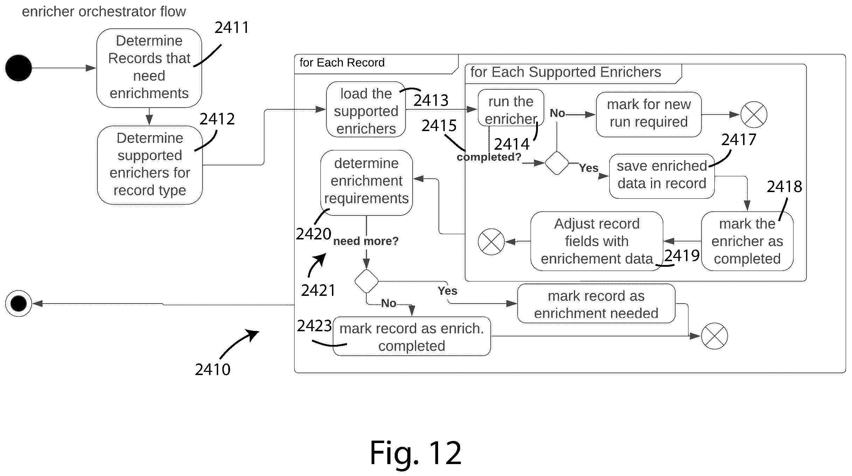

### 2410 Enricher Orchestrator Flow: Figure 12

The enricher orchestrator flow 2410 controls the enrichment process for each record and coordinates the execution of the supported enrichers through the following phases.

### 2411 Identification of Records Requiring Enrichment

It begins by identifying records that require enrichment.

### 2412 Determination of Supported Enrichers for Record Type

For each identified record, the system determines the supported enrichers based on the record type.

### 2413 Loading of Supported Enrichers

Each supported enricher is loaded.

### 2414 Execution of the Enricher

The enricher is executed to enrich the record.

### 2415 Completed?

If the enricher is not yet completed, the record is marked for re-execution, and the flow proceeds to step 2420. If the enricher is completed, the flow proceeds to step 2417.

### 2417 Saving Enriched Data in the Record

The enriched data is saved in the record.

### 2418 Marking Enricher as Completed

The enricher is marked as completed.

### 2419 Adjusting Record Fields with Enriched Data

The record fields are updated with the enriched data. The flow then proceeds to step 2420.

### 2420 Determination of Enrichment Needs

The system determines if further enrichments are necessary.

### 2421 Further Data Required?

If additional enrichment data is needed, the record is marked as requiring further enrichment. Otherwise, the flow proceeds to step 2423.

### 2423 Record Marked as Enrichment Completed

The record is marked as enrichment completed.

Together, the enricher flows and the orchestration of enrichment illustrated in Figures 11 and 12 represent a structured and coherent approach to data enrichment, optimizing efficiency and ensuring the integrity of the enriched information.

The uniqueness of the enrichment flow lies in the types of enrichment performed starting from the extractions made by the parsers (and related post-processing). The innovative element in this context is the use of unconventional sources and enrichment logics in data collection technologies in the sector. The algorithm of the invention uses advanced analysis and correlation techniques on the texts extracted by the parsers with the following logic:
- From textual records, information extractions are performed using Artificial Intelligence techniques of the NER (Named Entity Recognition) type, a family of AI algorithms that allows the invention to extract entities such as Companies, Organizations, references to Quantities, Domain Names, Geographic Locations, Names of Persons, or Dates.
- Depending on their type, the elements extracted through the previous step are used for subsequent correlations, in particular:
- The extracted company name is indexed as the company name correlated to the record.
- Subsequently, this name is used as a search key in external informational databases containing information on corporate entities. If information is found, the textual record is enriched with metadata related to the correlated corporate entity, such as Legal Name, Associated Domain Names, Revenue Classes, Industry Categories according to international taxonomies (e.g., Global Industry Classification Standard), employee number ranges, social channels associated with the company, etc.
- Unlike known systems, which employ other RDF and SPARQL query protocols designed for semantic languages, the present invention enables both free-text search and vector-based search. These methods do not merely generate graphs with SPARQL based on sentences extracted from a text, as is the case with currently used systems. Instead, they allow retrieval of content that can be queried in the future for text analysis.
- In contrast, thanks to the system of this invention, there is an association among multiple different texts to perform more complex verifications. The technical challenge underlying this technical effect is determining whether a company is linked to a series of raw data that was previously searched.
- The extracted company name is also used for further correlation through automated searches on internet search engines (e.g., Google, Bing, Yahoo!) to correlate the textual record with the company's official website.
- To reduce the rate of false correlations, the resulting links from this search are filtered through a blacklist system capable of preventing the correlation of the company name with search engines and company indexing platforms not related to the extracted company.
- Information is also correlated through the domain names associated with the company. The TLD portion of the domain name is used to identify countries correlated with the textual record.
- If the previous steps have not allowed the identification of a domain name, a search is performed with the company's Names and Aliases in external Name/Domain resolution services. Once the Domains linked to the company name are obtained, they are used in the previous steps.
- Once the information of the extracted entities is correlated with corporate information and references to company websites, operations are performed to extract domain names and subdomains, aiming to isolate the company's primary and secondary domain names. This measure has been adopted to increase the effectiveness of indexing operations and improve the accuracy of data access operations performed during the Access Flows.
- The textual records are then processed by a Generative Pre-Trained Transformer (GPT) AI algorithm to obtain a brief summary of the main information present in the record.
- The records are also processed by AI algorithms to detect the presence of types of sensitive data such as "personal data," "financial data," "customer data," etc. If such data are detected, the record is enriched with labels indicating the possible presence of these types of information within the record.

Previous versions of the invention used regular expressions for information extraction; however, this approach was limiting because it was not scalable in identifying mentioned company names and the domains involved. To solve the problem of identifying the entities of interest, tests were carried out with various BERT-based algorithms (CoNLL-2003, OntoNotes 5.0, Collection3, AutoML) and BIO encoding schemes. Similar attempts were made to find reliable solutions for Name/Domain resolution.

### Indexing Flows

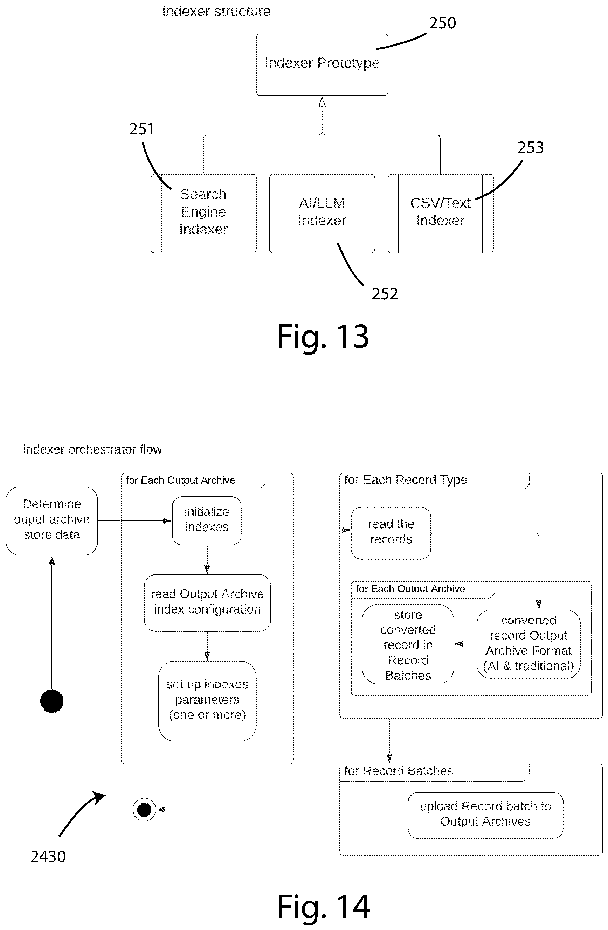

Figure 13 outlines the structure of the indexers used to organize and make data accessible, focusing on step 21 of the indexing process (figure 1) - the processing and export of informational records in multiple forms suitable for consumption. The modular approach offers a versatile and targeted methodology for managing data efficiently.

250 Prototype Indexer: Serves as the foundation from which other types of indexers are derived. This prototype incorporates the basic features and functionalities necessary for data organization and indexing.

### 251 Search Engine Indexer:

The "Search Engine Indexers" (251) represent a specialized type designed to organize data in a format that facilitates search and retrieval. These indexers create an index that links keywords to associated documents, improving search effectiveness.

### 252 AI/LLM Indexer:

The "AI/LLM Indexers" 252 focus on utilizing Artificial Intelligence (AI) and Large Language Models (LLM) to create advanced indexes. These indexers use sophisticated algorithms to identify concepts, relationships, and semantically related content, improving the precision of search results.

### 253 CSV/Text Indexer:

The "CSV/Text Indexers" 253 are designed to process data in CSV or text format. These indexers extract and structure the information contained in CSV or text files, creating indexes that allow detailed organization and targeted searches.

The structured approach of the indexers, as shown in Figure 13, illustrates a comprehensive method for data organization and management. The combination of prototype indexers and specialized types offers a wide range of indexing options, allowing targeted and optimized data processing for both search and access.

Figure 14 illustrates the flow of the indexer orchestrator 2430. The orchestration of the indexers is designed to efficiently manage data organization and index creation for different destinations.

Overall, the indexer orchestrator flow illustrated in Figure 14 represents a structured and efficient method for organizing data, creating indexes, and storing indexed records, ensuring quick and precise access to information.

Based on the above, it is evident that the record indexing flow bifurcates into two families:
- Indexing towards "full-text" engines based on "schema-free" Lucene technologies.
- Indexing towards "vector-based" engines for storing and retrieving information through high-dimensional vectors.

In the first family of "schema-free" engines, the uniqueness lies in the construction of indexing logic. The default indexing schema of the technology proved inadequate because the standard "Unicode Text Segmentation" algorithm presents problems during data lookup, especially with compound names and special characters. This compromised the accuracy of user search results. Therefore, an alternative configuration was developed with settings suitable for optimizing user searches. Before each indexing, the invention configures the "schema-free" engines with specific settings aimed at customizing the mapping between the type of indexed data and characters-the "character type-mapping." Specifically, configurations are implemented to modify the system's behavior during tokenization of inserted records: in cases of typical tokens of domain names like "-" and ".", the symbols are interpreted as alphanumeric rather than stop words, preserving the semantics of domain names. It's important to note that these mapping modifications are applied only to certain specific fields, while descriptive fields containing complex phrases and natural language are indexed with standard mappings. This distinction was necessary to significantly reduce the rate of false matches during the Access Flows.

In the second family of "vector-based" engines, the uniqueness lies in the preprocessing performed before indexing the enriched records. Before the chunking phase typical of ingestion processes of vector database engines, the invention creates a series of descriptive texts in UTF-8 encoding with the tabulation described below, suitable in length for the Word Embedding algorithms used, and selects the most significant fields of the enriched record. The indexing algorithm of the vector engine is iterative and applies each time to a limited data set to contain computational efforts. Each iteration of the indexing algorithm for the vector engine includes:
- Extraction of a batch of enriched records sized according to system parameters and desired performance.
- Generation of the corresponding textual representation for each batch. Specifically:
- The textual record to be vectorized is generated by remapping the enriched records through the tabulation of selected fields mapped using the following BNF syntax:
   records := <record> ["\n" "\n" <record>] ;
   record := <field> "." [ <record> ] ;
   field := <header>":"<record_segment>" ;
   header := <:alphanum:> ;
   record_segment := <:alphanum:> [ " " <record_segment> ] ;
- Splitting/Segmentation process:
   The batch of records is subjected to splitting, typical of vectorization algorithms. Text segment sizes and overlaps are determined in accordance with the specifications of the vectorization algorithms and the selected informational records.
- Trimming:
   Before passing the segments to the AI vectorization algorithm, their total length is verified and adjusted through a "trimming" process to prevent compatibility issues with the AI algorithms.
- Insertion into the vector database:
   The obtained vectors are then inserted into the vector database configured with cosine distance metrics.

Refinements in the preprocessing method before indexing on vector engines were necessary due to initial inaccuracies found when simply loading unprocessed textual transcriptions of records. Initial tests showed poor effectiveness during the search phase, as retrieved data often did not match user searches. Additionally, various tests were conducted to identify the most suitable Word Embedding algorithms for the data, experimenting with algorithms from different vendors, including multi-language variants and different tokenization algorithms (e.g., tiktoken, recursive-splitting, Byte-Pair Encoding tokenization).

### Access Flows

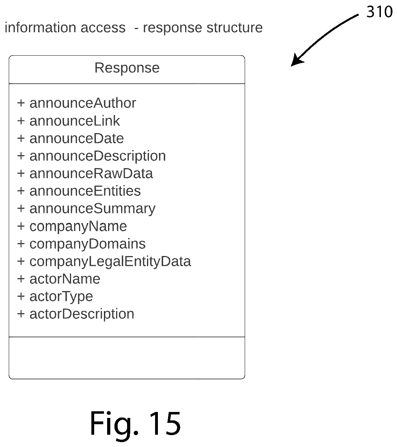

Figure 15 introduces the structure of the components responsible for the "access" phase to the data-the processing of user requests and the logic for retrieving and processing cyber intelligence information used in process step 31. This structure is designed to provide a complete and structured response to information access requests.

### 310 Response:

Response 310 represents the main element of this structure. It contains all relevant information, specified below, presented to the user as a result of the information access request.

In summary, the response structure illustrated in Figure 15 offers a structured and complete presentation of information to users seeking data access. The modular and informative approach promotes rapid and detailed understanding of the presented content.

The invention brings five main advantages over the state of the art:
- Richness of Sources: Combines sources from the darknet and underground world, as well as corporate, governmental, and open sources.
- Reduced False Positives: Both the collection and information retrieval processes are designed to focus on findings related to the companies of interest, thus limiting "false alarm" or "false match" problems.
- Advanced Integrations and Artificial Intelligence: Information is processed using advanced AI algorithms, correlated with company information, and expanded to maximize match chances and filter out low-relevance events.
- Natural Language Intelligibility: The invention includes interrogation functions through requests expressed in natural language, interpreted by an AI trained for contextual responses to the information indexed by the subsystems.
- Scalability: Unlike current platforms, the invention includes infrastructure codes designed to install the system within scalable cloud environments with high load performance.
- Relevance of Informational Records: Each informational record underlies a significant concrete risk that occurred on a specific date for the company concerned.

The particularities of the access flows are divided into two areas: those related to accessing indexed records via "free-text" engines and those related to accessing data indexed via "vector-based" engines.

For access flows related to data indexed on "schema-free" engines, the uniqueness of the invention lies in two main elements:
- Processing of user requests related to domain names and keywords:
- User requests mentioning one or more domain names are preprocessed to filter out spurious domains, i.e., those not matching the domain name format. In "strict" search mode, only the main domain mentioned is extracted, maximizing match chances on data indexed in "schema-free" engines.
- Searches are conducted by selecting fields and indexes based on the user request type. For domain name requests with "strict/conservative" logic, specific indexes are used to match main domain names in records. In "extended" mode, specified portions of domain names are matched, increasing match probabilities.
- Similarly, searches based on keywords and company names use different indexes, preconfigured with suitable mapping for phrases and natural text. A "strict/conservative" logic uses the user's search phrase in its entirety, returning only records with a complete sequential match of the specified search words, excluding stop words. In "extended" mode, the user's search phrase is used as a set of non-consecutive search keys, potentially matching multiple parts of the informational records, increasing match possibilities.
- Data extraction through parallel searches on multiple storage clusters:
   - Searches during access flows to data indexed by "schema-free" engines are architected to support dynamic configuration of multiple independent indexing engines, allowing greater scalability, performance, and redundancy in accessing informational records. User searches are directed in parallel on multiple sets of indexing engines depending on the data type requested (digital extortions, violations, bulletins, etc.). For each set, searches are performed on one or more independent engines, and results are combined into a single comprehensive response for the user.

Regarding access flows related to data indexed on "vector engines", The uniqueness of the invention lies in the preliminary tuning before generating responses via AI. Specifically, after the standard phase of vectorizing the query and retrieving relevant records through the vector indexing engine, the invention performs a dynamic post-processing of the returned text records. This ensures that the records are submitted to the generative model in a manner compatible with the context window size of the large language model (LLM) used, following this logic:
... ''' response_data = concatenate each record "r" where "r" is one of the matching records, truncated to the first ("Maximum Context Window Size" - "Prompt Size") / "Number of Records Retrieved". '''
...

This phase, combined with an adequately engineered "prompt", is critical for generating relevant and factual responses. Before being submitted to the AI in the final generation phase, the extracted text records are "trimmed" by dynamically calculating 1) how many information records were retrieved, 2) how extensive the generation prompt is, and 3) the capacity of the context window. Based on this calculation, each text record is adjusted to retain the maximum possible information content without compromising the quality of the generated response.

The Access Flow concludes with providing the user with the AI-generated response, which includes references to the information records used to generate the answer, along with the records themselves. This approach is crucial for increasing the credibility and accuracy of the responses generated by this final flow.

The invention described here is open to various modifications and variations, all of which fall within the scope of the inventive concept.

Moreover, all details can be substituted by other technically equivalent phases.

Finally, the components used in the system, provided they are compatible with the specific use, and the dimensions, can be adapted to any requirements and state of the art.

Where the characteristics and techniques mentioned in any claim are followed by reference signs, these have been included solely to enhance the intelligibility of the claims and, consequently, such reference signs have no limiting effect on the interpretation of each element identified by example with those reference signs.

## Claims

1. A method for creating a computer-executable index file for indexing and searching non-aggregated files, comprising, in sequence:
a phase of collecting data from non-aggregated files in a web browser from a source of interest,
a phase of preliminary analysis of said data,
a phase of collecting first contents from said data,
a phase of integrating and processing said first contents to transform them into second contents,
a phase of storing said second contents, and
a phase of indexing said second contents, the method being **characterized in that**, during the phase of integrating and processing said first contents to transform them into second contents, informational extractions are performed on the first contents using Artificial Intelligence techniques of the NER (Named Entity Recognition) type to extract and label a plurality of entities, such as Companies, Organizations, references to Quantities, Domain Names, Geographical Locations, Names of Persons, or Dates, the extracted entities being used during the following phases:
correlating a first extracted entity to the second contents;
using the first extracted entity as a search key in external informational databases containing information on company structures and, if information is found, enriching the second contents with metadata related to the associated company structure, particularly Legal Name, Alias, Associated Domain Names, Revenue Classes, Merchandise Categories according to international taxonomies, ranges of employee numbers, and social channels associated with the company;
correlating the second contents with the official website of the first extracted entity.

2. The method according to claim 1, **characterized in that** the extracted entities are used in at least one of the following phases:
performing a search with the Names and Aliases of the first extracted entity in external Name/Domain resolution services to identify domain names associated with the first extracted entity with a TLD portion;
correlating the TLD portion of an extracted domain name associated with the first extracted entity with the second contents through metadata related to the nation of the first extracted entity.

3. The method according to claim 1 or 2, **characterized in that**, during the phase of integrating and processing said first contents to transform them into second contents, at least one of the following phases occurs:
using machine learning (ML) algorithms and natural language processing (NLP) methods to extract semantic information, recognize patterns, and/or uncover hidden relationships within the first contents;
extracting and analyzing first contents published by the first entities to detect financial information and/or strategic communications;
performing SERP analysis to identify ranking positions, links to institutional portals, and/or text snippets.

4. The method according to one of claims 1-3, **characterized in that** the phase of collecting data from non-aggregated files in a web browser from a source of interest includes the following:
preparing a user profile in a controlled environment with active sessions at sources of interest, including authenticated access and inclusive of cache, cookies, session storage, local storage, and permanent storage;
downloading the web browser user profile;
configuring the web browser user profile to include authenticated access to the source of interest with all relevant storage components.

5. The method according to one of claims 1-4, **characterized in that** the phase of integrating and processing said first contents to transform them into second contents includes:
applying Artificial Intelligence techniques of the NER (Named Entity Recognition) type to specific fields of the first contents, such as the "title" or text fields likely to mention the first entities;
identifying a string associated with the first entity;
adding said string to the second contents.

6. The method according to claim 5, **characterized in that** it includes the following phases:
inserting said string as a search key in an external informational database containing information on company structures to retrieve a text record and/or a company website;
adding said text record to the second contents.

7. The method according to claim 6, **characterized in that**, if no text record or company website is found:
inserting said string as a search key in an external Name/Domain resolution service to retrieve a text record and/or a company website;
adding said text record to the second contents.

8. The method according to claim 6 or 7, **characterized in that** it includes:
correlating said text record with the corresponding company website;
filtering said company website through a blacklist system.

9. The method according to claim 8, **characterized in that** it includes:
extracting the domain name and subdomain to isolate the primary and secondary domain names of the first entity.

10. The method according to one of claims 6-9, **characterized in that** it includes:
processing the text record using a Generative Pre-Trained Transformer (GPT) AI algorithm to produce a brief summary of the main information in the text record.

11. The method according to claim 10, **characterized in that** it includes:
searching for the presence of a specific type of sensitive data, such as "personal data," "financial data," or "customer data";
if present, tagging the text record with a label.

12. The method according to one of claims 6-9, **characterized in that**, before the indexing phase, it includes:
configuring a "schema-free" engine to customize the mapping of the second contents so that symbols "-" and "." in text records related to websites are interpreted as alphanumeric.

13. The method according to one of claims 1-12, **characterized in that**, before the indexing phase, it includes:
creating a series of descriptive texts in UTF-8 encoding with a suitable length for the Word Embedding algorithms used and/or selecting the most significant fields of the second contents.

14. The method according to claim 13, **characterized in that** the indexing phase includes at least one of the following:
selecting a portion of the second contents;
extracting the selected portion of the second contents;
for each selected portion of the second contents, generating a corresponding textual representation.

15. The method according to claim 14, **characterized in that** the generation of the corresponding textual representation is performed by remapping the selected portion of the second contents through tabulation of a field selection mapped using the following BNF syntax:
records := <record> ["\n" "\n" <record>];
record := <field> "." [<record>];
field := <header> ":" <field_snippet>;
header := <:alphanum:>;
field_snippet := <:alphanum:> [" " <field_snippet>].
